# NEW EUROPEAN PATENT SPECIFICATION

(11) **EP 0 672 081 B2**
(45) Date of publication and mention of the opposition decision: **04.09.2002**
(45) Mention of the grant of the patent: 23.04.1997
(21) Application number: 94901920.2
(22) Date of filing: 26.11.1993
(51) Int. Cl.: C08L 23/08

(54) **IMPROVED PROCESSING POLYOLEFIN BLENDS**
VERBESSERTE VERARBEITUNG VON POLYOLEFINMISCHUNGEN
MELANGES DE POLYOLEFINES A TRANSFORMABILITE AMELIOREE

(30) Priority: 27.11.1992 GB 9224876
(43) Date of publication of application: 20.09.1995
(73) Proprietor: ExxonMobil Chemical Patents Inc., Linden, NJ 07036-0710 (US)
(72) Inventor: CHAMBON, François, Henri, B-1950 Kraainem (BE); TRUDELL, Barry, Colin, Houston, TX 77062 (US)
(74) Representative: UEXKÜLL & STOLBERG
(86) International application number: EP9303355
(87) International publication number: WO94012568

(56) References cited:
- EP-A- 0 022 376
- EP-A- 0 057 891
- EP-A- 0 128 045
- EP-A- 0 129 368
- EP-A- 0 492 656
- EP-A- 0 529 978
- EP-A- 0 580 930
- FR-A- 1 365 548
- US-A- 3 380 978
- US-A- 3 592 880
- US-A- 3 914 342
- US-A- 4 357 448
- US-A- 4 824 912
- US-A- 5 047 468
- US-A- 5 102 955
- J.M. Dealy et al. "Melt Rheology and its Role in Plastics Processing", 1990, Van Nostrand Reinhold, pp. 336-341

## Description

### Technical Field

This invention relates to polyolefin blends prepared by metallocene coordination catalysis capable of high shear extrusion into extruded compositions exhibiting improved surface propertles of gloss and smoothness. More particularly, it relates to polyolefin blend compositions containing from 40 wt.% to 80 wt.% low weight-average molecular weight polyethylene having a density greater than or equal to 0.900 up to 0.945 g/cm³, and having a blend polydispersity index of greater than 3.5.

### Background of the Invention

Flow instabilities in polymer processing often dramatically limit the maximum throughput possible in common convening operations. They produce irregularities of the polymer surface which are generally referred to as "melt fracture'. Depending on the periodicily and the amplitude of the distortion, they can be classified as : slip-slick, sharkskin and wavy fracture. Slipstick is an observed result of the phenomena that at characteristic throughput-pressure required to extrude the resin, the pressure often begins to oscillate. Under oscillating pressure conditions, the extrudate exhibits alternating regions of smooth and rough surface making it of essentially no use. Over the recent past, slip-stick has been a very severe limiting factor for the wide utilization of neat polyethylene resins based upon LLDPE. Sharkskin is shear-stress induced surface irregularity of high frequency and low magnitude that reduces surface gloss, increases apparent roughness and accordingly limits the use of the compositions or limits the processing conditions such that the process is not commercially attractive. Numerous patents have addressed these phenomena, e.g. US-A-4 859 398 discloses extrusion process parameters that are said to reduce sharkskin. However, this description also indicates that shear-stress and exit die temperature are to be kept at low values, thus limiting the utility of such solutions.

The following visual representation illustrates examples of the surface characteristics of extrudate having slip-stick and sharkskin

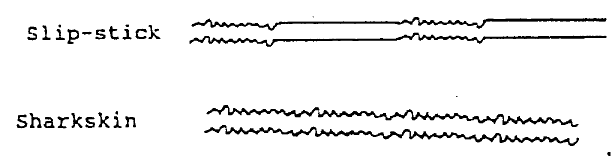

In view of these problems with processing and resulting surface properties, various processing aids and/or flow improvers have been utilized or proposed. See generally, Ency. of Poly.Sci. and Eng. (2d Ed.). Index vol., pp. 307-324 (J. Wiley & Sons, 1990). Polyethylene wax is listed as a lubricating processing aid for LLDPE on p. 320. However these additives can lead to other problems because of their general incompatibility with the polyolefin resins being processed. Traditional processing aids such as silicone oils and other low molecular weight, non-hydrocarbon compounds are often prohibited from use in medical and food packaging applications. Additionally, the use of the traditional low molecular weight compounds can cause "blooming", the exudation of the low molecular weight materials during use or storage over time, which results in an oily feel or even discoloration of the final extruded compositions.

Additionally it is known generally for polyolefin polymers that the use of broad molecular weight distribution (MWD, or polydispersity index) blend compositions can allow increased processing speeds while maintaining or improving various properties, including surface properties. In particular. PCT-A-WO 90/03414 addresses a broad class of linear ethylene interpolymer blends having improved mechanical, physical or chemical properties wherein the blends have M_{w}/Mₙ > 3 and wherein each blend component has a higher comonomer content than any other component of lower average molecular weight (described as a narrow composition distribution having composition distribution breadth index, "CDBI", of >50%). Samples 9D, 21F and 22E of Example 3 illustrate blends having approximately 33wt.% of a polyethylene blend component having 0.0wt.% comonomer and M_{w} of 13,400. Though, in general, poor surface properties are said to be minimized, and improved properties of reduced coefficients of friction and lower extractables are said to be achieved by the broad class of interpolymer blends described, the examples address only compression molded sheets and the properties thereof, not including extrudate properties.

The effects of higherspeed melt processing have also been recently addressed in the technical literature. Extrudate surface detects in linear polydimethylsiloxane are addressed by simulation methods to postulate that hydrostatic tension cavitates the polymer melt within 1 micron of the die exit to create conditions for sharkskin formation in "Sharkskin defects of polymer melts: The role of cohesion and adhesion", B. Tremblay, J. Rheol. 35 (6), pp. 989-975 (August, 1991). The author also postulates, p. 997, that the known phenomena of decreasing sharkskin with increase of MWD may possibly be explained by the diffusion of low molecular weight species and filling of micrcoscopic voids produced so as to prevent cavitation In "Effects of Polymer Structure on the Onset of Processing Defects in Linear Low Density Polyethylene". L.Kale et al. Poly. Eng. and Sci., v.31, no. 22 (Nov. 1991), it was concluded that the severity of the melt processing defects appears to be inversely related to the amount of low molecular weight, highly branched material.

### Figures

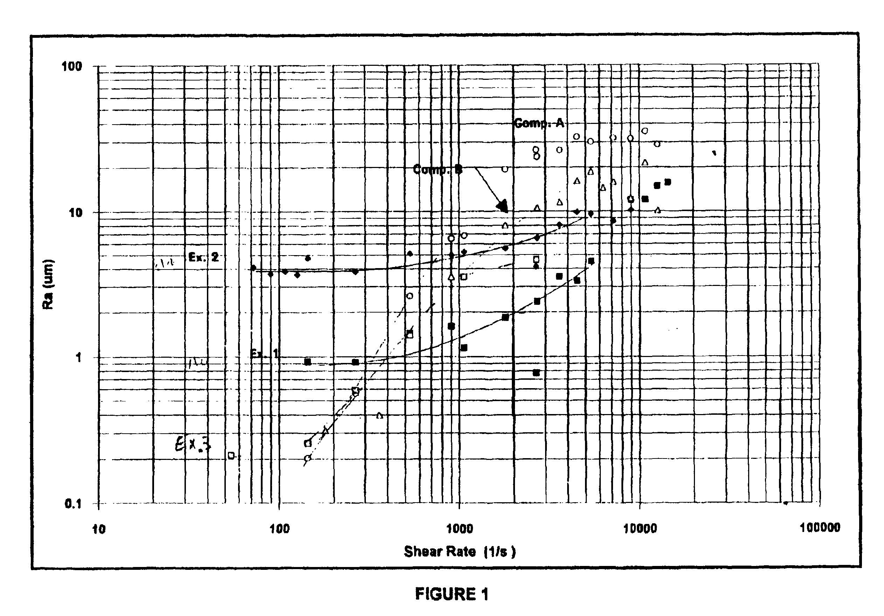

FIG. 1 is a graphic plot of the measurement of amplitude of distortion against shear rate for Examples 1 and 2 blends in accordance with the invention and comparison examples A and B blends representing the prior art.

### Invention Disclosure

It has been discovered that by using effective amounts of a low weight-average molecular weight thermoplastic polyethylene having a density greater than or equal to 0.900 up to 0.945 g/cm³ ("PE modifier") in polyolefin blends and that by achieving a blend polydispersity index of greater than 3.5 for the resulting blends, surface properties resulting from high shear processing of the blends are improved by largely eliminating or effectively minimizing the occurrence of surface distortions. Thus the invention is directed to a polyolefin blend prepared by metallocene coordination catalysis suitable for high shear-stress extrusion char acterized by comprising: a) at least 40 wt.%, particularly more than about 45 wt.%, or even 60 wt % and higher to 80 wt.% of total polymer blend of low M_{w} polyethylene having a density greater than or equal to 0.900 g/cm³ up to 0.945 g/cm³ and, b) 55 to 20 wt.% of total polymer blend of LLDPE having a density less than 0.930 g/cm³ content is at least 70 mol.%, preferably at least 80 mol.%, where C₃-C₁₆ α-olefins are copolymerized, and wherein the M.I. of the b) component is less than 50 and selected such that the blend of a) and b) exhibits an MWD of greater than 3.5.the MI of a) is greater than or equal to 50 but less than or equal to 1000.

By means of the present invention, surface distortion of potyolefin extrudate is controlled in two ways:
- it is eliminated of at least shifted outside the processing window, thus making the region of higher extrusion rates practically useful;
- it can be finely tuned so that slip-stick is eliminated while surface distortion of low amplitude is retained. This is in recognition of the fact that for some applications surface distortion may be desirable, i.e. light sharkskin provides non-glossy, improved feel extrudates.

Accordingly, increased processing speeds are made possible for applications of polyoletin extruded products where surface defects or distortions were previously detriments to the desired end use. Also means provided for selecting the polyolefin blends of the invention permit tailoring of blend melt index ("M.I.") to achieve M.I. ranges that will be most suitable for existing equipment to maximize processing speeds while avoiding the surface distortions previously observed at such speeds on that equipment.

### Best Mode and Examples of the Invention

The invention will typically comprise the use of 40 wt.% to 80 wt.% of the PE modifier of the invention in a polyolefin blend, which with the provision of said PE modifier has a polydispersity index of > 3.5, for the purpose of improving the surface distortion of polyolefin blends subjected to high shear rate extrusion. Alternatively, the invention can be defined as a process for producing an extruded polyolefin composition having improved surface properties of gloss and smoothness characterized by comprising the steps of a) providing a polyolefin blend comprising 40 wt.% to 80 wt.% PE modifier and having a blend polydispersity index of greater than 3.5; and, b) extruding the blend of step a) under high shear conditions.

For the purposes of describing the invention and results of its use the term surface roughness index (R_{A}) is defined to mean the first moment of the amplitude of surface distortion as measured by a SURFCOM IIOB, from TOKYO SEIMITSU CO. Lid., Tokyo, Japan, and expressed in units of micromelers (µm). Typically the R_{A} of polyolelin blends extruded under the higher shear rate conditions of the invention will be less than 10µm, preferably less than 9µm, and even more preferable less than 3µm. The term "high shear rate extrusion" in the description of the invention is meant as understood in the polymers processing and converting art and is to encompass shear rate of not less than 500 s⁻¹ (second⁻¹ or 1/second), for example, 500-1900 s⁻¹, and above. Melt index (M.I.) as referred to in the description and claims refers to that measured in g/10 min at 190°C and 2.16 kg (ASTM D1238). Density is reported in g/cm³.

The PE modifier of the invention is one having a low weight-average molecular weight (M_{w}), having an M.I. greater than or equal to 50 but less than or equal to 1000, preferably from 100 to 650, and a density of 0.900 g/cm³, preferably from 0.910, more preferably from 0.920, up to 0.945. It will be comprised of polyethylene homopolymer or copolymer, or blends, of ethylene and one or more monomers copolymerizable therewith; having sufficient degree of crystallinity to achieve the density range described. Preferred copolymerizable monomers include the C₃ - C₁₆ α-olefins or diolelins, particularly the C₄ - C₈ α-oletins. Level of incorporation of the comonomers determines density variation and can be either random or more regular The density limitations are critical to the invention in that incorporation of the copolymerizable monomers disrupts the crystalline order of the copolymer formed, due to creation of branching in the otherwise linear ethylene-based polymer, and thus operates to decrease the apparent density with increased comonomer incorporation.

Methods of preparation of the PE modifier of the invention which is by metallocene coordination catalysis are well-known in the art. One method is in PCT-A1-WO 90/03414. Catalysts and means of preparation of suitable polyethylene homo- and copolymers appear in the patent literature. Additionally, such publications as Ency. of Poly. Sci. and Eng.. vol. 6, pp. 383-490 (J. Wiley & Sons, 1986), and Textbook of Polymer Science (3d ed.), F.W. Billmeyer, Jr., Pages 361-370 (J. Wiley & Sons, 1984) can be consulted for background information as to comonomers, methods of preparation and sources of commercial products. Low M_{w} high-density polyethylene (HDPE) typically has up to 2 wt.% comonomer, e.g. 1-butene, 1-hexene or 1-octene. Inclusion of more, up to 10 wt.%, results in polyethylene copolymer having densities less than 0.941 g/cm³ but still within the density range defined for the purposes of this invention.

The polyolefin blend ot the invention comprises, in addition to the PE Modifier of the invention, LLDPE, as defined above, wherein the ethylene content is at least 70 mol.%, preferably at least 80 mol.%, where C₃-C₁₆ α-olefins and/or dioltins are copolymerized, and the M.I. is less than 50, preferably less than 10, more preferably less than 3. This polyolefin blend comprises LLDPE, as those term is understood in the art and appear in such as Ency. of Poly. Sci. and Eng. and Textbook of Polymer Science, see above.

An example of a blend according to the invention in given in Claim 1.

Low-density polyethylene ("LDPE") is a well-known commodity product and includes both low and medium density polyethylene having densities of 0.910 to 0.940 g/cm³. The term as used herein includes copolymers and terpolymers of ethylene which are thermoplastic resins. Comonomers typically include C₃-C₁₀ α-olefins. The C₂ content will typically exceed 80 wt% of the polyethylene co- and terpolymers.

The linear low-density polyethylene ("LLDPE") of the invention are copolymers of ethylene with at least one alphaolefin having at least four carbon atoms, e.g., 1-butene, 1-hexene: 1-octene, etc. The processes for producing LLDPE based on metallocene coordination polymerization and are well known in the art. Commercial grades are widely available.

High density polyethylene ('HDPE') has a density of 0.941 to 0.975 g/cm³ and is an established product of commerce. Suitable HDPE has molecular weights in the range of 150,000 to 300,000, and includes high molecular weight ("HMW") HDPE which has molecular weights in the range of 300,000 to 500,000. Its manufacture and general properties are well known in the art.

Blends of the invention are prepared by blending the described components in the desired proportions using conventional melt-processing blending techniques and apparatus, for example. Banbury mixers, single or multiple screw extruders and the like. To achieve the described MWD for the invention blends, components are selected meeting the above criteria and provided in such proportions as empirically result in both ol largelled M.I. and MWD for the blend as is conventionally done in the polymer processing industry. Conversion of M.I. to M_{w} for initial target proportions, from which iteration is conducted for fine tuning, is typically done by use of empirically derived relationships for the specific polymers as is known in the art. See, for example, "Melt Flow Index: More Than Just A Quality Control Rheological Parameter. Part I.', A. Shenoy and D. Saini, Advances in Polymer Technology, Vol. 6, No. 1, 1-58(1986).

Alternatively, blends may be made by direct polymerization, using, for example, two or more catalysts in a single reactor or one or more catalysts in parallel or series reactors, where the catalysts, monomer feeds, and reactor conditions are provided that are suitable for the preparation of polymer components meeting the invention description. Such direct polymerization blends are known in the polyolefin an, see for example PCT-A-WO 90/03414.

By use of the invention, the rate of surface roughness increase of the extruded polyolefin compositons with extrusion throughput can be accurately controlled by the extent to which MWD is broadened and the difference in density, between the PE Modifier and remaining polyolelin component, is increased. More specifically, based on the present invention, resins with comparably useful MIs can be tailored by selection of component M I and density such that R_{A} remain constant over a wide range of extrusion rates. In Examples 1 and 2, below, increasing the difference in measured densities between the PE Modifier and the other polyolefin component decreased the measured R_{A} in addition to flattening for both the curve of RA vs. shear rate, see Fig. 1.

Without intending to be present limitations to the invention. it is believed that the presence of the PE modifier in the polyolefin blends of the invention permits the improved processing with decreased surface defects due to a migration of at least an effective amount of the PE modifier to the surface of the blend during the high shear stress processing. Both of the low M_{w} and the low levels of chain branching, as is reflected in the density, permit improved dispersion and ease of migration to the surface. However the fact that the PE modifier is still of a high enough M_{w} to permit of some level of chain entanglement likely prevents its being significantly extractable and helps prevent reduction of blend viscosity below that typically necessary for effective extrusion.

In conclusion, the combination of the density effects and MWD described in the present invention will allow the polymer manufacturer to design resins which can be processed at unusually higher converting rates retaining simultaneously a complete control over the surface aspect of the extrudate. It will be apparent to those of skill in polymer science given the disclosure herein that the principles of this invention will be extendable to other polymer systems. that is inclusion of one, or more, miscible polymer species that is of lower molecular weight and higher in density than the matrix polymer or polymer blend to be processed by extrusion will enable improvement of the surface appearance and smoothness.

The industrial applicability of this invention will arise principally in the polymer processing and converting industry where polyolefin films, laminations, coatings, extrusion molded parts and articles, injection molded parts and articles are made. Particular advantage can be obtained for those applications where the traditional use of process aids or flow improvers was needed to utilize high shear rates, with the instant invention such process aids or flow improvers can be essentially eliminated or minimized, if not altogether omitted For example, in blown film applications the desired shear rate for processing can be 500-1,000 s⁻¹, in film casting and coating up to 2000 s⁻¹, and cable coating up to 10,000 s⁻¹. As with other polyolefin blends, additives such as reinforcing fillers, pigments or colorants. UV stabilizers, antioxidants, etc., can be provided in conventional amounts in accordance with conventional methods to achieve specifically desired end product properties.

The following examples are presented to illustrate the foregoing discussion. All parts, proportions and percentages are by weight unless otherwise indicated. Although the examples may be directed to certain embodiments of the present invention, they are not to be viewed as limiting the invention in any specific respect.

### Example 1

A blend of polyolefin resin and PE modifier in accordance with the invention was provided in which the polyolefin constituted 30 wt.% and was a polyethylene copolymer resin with 20 mol.% 1-butene, having a M.I. of 0.14 and a density of 0.876, and the PE Modifier was a polyethylene copolymer, with 4 mol.% 1-butene, having a M I. of 122 and a density of 0.925. The polydispersity of the blend as measured by GPC was 4.3 and the M.I. was 5.2. Both polymers were prepared separately by gas-phase polymerization utilizing bis(n-butylcycbpentadienyl)zirconium dichloride with alumoxane-treated silica.

Generally speaking, the M.I. of both the ethylene copolymers prepared were controlled by adjustment of the amount of H₂ present and the density was controlled by the amount of comonomer present, both during polymerization. In particular, the polymerization was conducted for the PE Modifier in a continuous gas-phase reactor at a temperature of 145°C., pressure of about 2.07 x 10⁶ Pa (300 psi), H2 concentration 460 ppm, C₂ concentration 52.0 mol.%, C₄ concentration 2.85 mol.%. The polyolefin component was polymerized similarly at a temperature of 111.7°C., pressure of about 2.07 x 10⁶ Pa (300 psi), H2 concentration 84 ppm, C₂ concentration 42.0 mol.%, C₄ concentration 6.45 mol. %. Residence times ranged between 2 and 5 hours. Both polymers exhibited narrow MWD (2.0-2.7) and narrow composilion distribution (CD) (approximately equal comonomer content and molecular weight in each polymer chain of each component respectively).

The blend components were fed to a Wemer Pfleiderer ZSK 57 twin screw extruder under melt processing conditions in which the processing temperature was 199°C., the extruder speed was 295 rpm and the applied torque was 91% maximum. The blend was mixed under these conditions, extruded and cut into pellets. These were fed to a Gottfert Rheograph 2002 for measurement of shear stress vs. shear rate using a circular die with L/D of 30/1 at 190°C. The extrudate of the Rheograph was collected, cooled and examined with the Surfcom 110B.

The blend of Example 1 was subjected to increase in shear stress, and accordingly shear rate, with the resulting observation that R_{A} remained essentially constant at about 1-2 µm over shear rate increase from about 100 s⁻¹ to about 2000 s⁻¹. Up to about 10,000 s⁻¹, RA steadily increased to about 10 µm.

### Example 2

A blend of polyolefin resin and a PE Modifier in accordance with the invention was provided in which the polyolefin constituted 30 wt.% and was a polyethylene copolymer resin with 8 mol.% 1-butene, having a M.I. of 0.09 and a density of 0.910, and the PE modifier constituted 70 wt.% and was a polyethylene copolymer, with 6 mol.% 1-butene, having a M.I. of 97 and a density of 0.910. The polydispersity of the blend as measured by GPC was 4.6 and the M.I. was 4.7. Both polymers were prepared separately by gas-phase polymerizalion utilizing bis(n-butylcyclopentadienyl)zirconium dichloride with alumoxane treated silica generally as described in Example 1.

The blend blend components were mell processed and extruded for shear stress vs. shear strain analysis and R_{A} also in accordance with Example 1.

The R_{A} as measured in the Surfcom 110B remained essentially constant at about 4-6 µm over shear rate increases from about 70 s⁻¹ to about 2000 s⁻¹, From 2000 s⁻¹ to 4500 s⁻¹, R_{A} increased to about 10 µm. See again FIG. 1.

### Comparison Example A

A polyolefin blend having a narow MWD (2.1) was prepared having an M.I of 5.0 as a comparison for Examples 1 and 2. It consisted of two components in equal amounts (50 wt.% each), the A component was a polyethylene copolymer resin with 10 mol.% 1-butene, having a M.I. of 5.1 and a density of 0.897, and the B component was a polyethylene copolymer, with 5 mol.% 1-butene, having a M.I. of 4.6 and a density of 0.922. Both polymers were prepared by gas-phase polymerization utilizing bis(n-butylcyclopentadienyl)zirconium dichloride with alumoxane treatcd silica generally as described for Example 1.

The blend was melt processed and extruded for shear stress vs. shear strain analysis and R_{A} in accordance with Example 1.

The polyolefin blend exhibited essentially constant rate of increase of R_{A} from about 0.2 µm to 20 µm for shear rate increase from 150 s⁻¹ to 1900 s⁻¹. The R_{A} at a shear rate of 500 s⁻¹ was 3 µm and increasingly rapidly, FIG. 1.

### Comparison Example B

A commercial LLDPE sold for moulding applications and ready processability was provided having a MWD above about 3.5, density of 0.935 and also an M.I. of 5.0. This Escorene® LL 6301 RQ LLDPE (Exxon Chem. Inter. Inc.) was similarly melt processed and extruded for shear stress vs. shear strain and R_{A} analysis in accordance with Example 1. The graph of FIG. 1 Illustrates the rapid increase in R_{A} as a function of shear tate. The LLDPE exhibited essentially constant rate of increase of R_{A} from about 0.3 µm to 8 µm for shear rate increase from 190 s⁻¹ to 1900 s⁻¹. The R_{A} at a shear rate of 10.000 s⁻¹ was about 20 µm. This example illustrates that though lower high shear rate processing with some standard LLDPE products may yield acceptable R_{A}, the increase in shear rate resulted in rapid deterioration of R_{A}.

## Claims

1. A polyolefin blend of polyethylene polymers prepared by metallocene coordination catalysis suitable for high shear-stress extrusion **characterized by** comprising:
a) from 40 wt.% to not more than 80 wt.% of total polymer blend of low M_{w} polyethylene **characterized by** a M.I. (g/10 min., 190°C, 2.16 kg) greater than or equal to 50 but less than or equal to 1000, having a density greater than or equal to 0.900 up to 0.945 g/cm³ and
b) 55 to 20 wt% of total polymer blend of LLDPE having a density less than 0.930 g/cm³ wherein the ethylene content is at least 70 mol%, preferably at least 80 mol%, where C₃-C₁₆ α-olefins and/or diolefins are copolymerized, and wherein the M.I. of the b) component is less than 50 and selected such that the blend of a) and b) exhibits an MWD of greater than 3.5.

2. A process for producing an extruded polyolefin composition having improved surface properties of gloss and smoothness **characterized by** comprising the steps of:
a) providing a polyolefin blend of polyethylene polymers prepared by metallocene coordination catalysis comprising
- from 40 wt.% to not more than 80 wt% of total polymer blend of low M_{w} polyethylene **characterized by** a M.I. (g/10 min., 190°C, 2.16 kg) greater than or equal to 50 but less than or equal to 1000 and a density greater than or equal to 0.900 up to 0.945 g/cm³,
- 55 to 20 wt.% of total polymer blend of LLDPE having a density less than 0.930 g/cm³ wherein the ethylene content is at least 70 mol%, preferably at least 80 mol%, where C₃-C₁₆ α-olefins and/or diolefins are copolymerized,
wherein the M.I. of the b) component is less than 50 and selected such that the blend of a) and b) exhibits an MWD of greater than 3.5, and
b) extruding the blend of step a) at shear rates not less than 500 S⁻¹.

3. A use of from 40 wt.% to not more than 80 wt% of total polymer blend of low M_{w} polyethylene prepared by metallocene coordination catalysis **characterized by** a M.I. (g/10 min., 190°C, 2.16 kg) greater than or equal to 50 but less than or equal to 1000 and a density greater than or equal to 0.900 up to 0.945 g/cm³,
in a polyolefin blend comprising 55 to 20 wt.% of total polymer blend of LLDPE prepared by metallocene coordination catalysis having a density less than 0.930 g/cm³ wherein the ethylene content is at least 70 mol%, preferably at least 80 mol%, where C₃-C₁₆ α-olefins and/or diolefins are copolymerized,
wherein the M.I. of the b) component is less than 50 and selected such that the blend of a) and b) exhibits an MWD of greater than 3.5, for the purpose of improving the surface distortion of said polyolefin blend subjected to high shear rate extrusion of not less than 500 s⁻¹.

4. The use according to claim 3 wherein said surface roughness (R_{A}) is greater than 0 but less than 2µm.

5. The use according to claims 3 or 4, wherein after extrusion at shear rates not less than 1900 s⁻¹, the surface distortion as measurd by surface roughness (R_{A}) is less than 10 µm.

## Patentansprüche

1. Polyolefinmischung von Polyethylenpolymeren, die mittels Metallocenkoordinationskatalyse hergestellt worden sind, welche für eine Extrusion mit hoher Scherung/Spannung geeignet ist, **dadurch gekennzeichnet, daß** sie umfaßt:
a) 40 Gew.-% bis nicht mehr als 80 Gew.-% der gesamten Polymermischung an Polyethylen mit niedrigem M_{w}, das durch einen M.I. (g/10 Minuten, 190 °C, 2,16 kg) von größer als oder gleich 50 aber kleiner als oder gleich 1000 und eine Dichte von größer als oder gleich 0,900 bis zu 0,945 g/cm³ **gekennzeichnet ist**, und
b) 55 bis 20 Gew.-% der gesamten Polymermischung an LLDPE mit einer Dichte kleiner als 0,930, worin der Ethylengehalt mindestens 70 Mol.% beträgt, vorzugsweise mindestens 80 Mol.%, wobei C₃- bis C₁₆-α-Olefine und/oder - Diolefine copolymerisiert sind, und wobei der M.I. von der b)-Komponente so gewählt ist, daß die Mischung von a) und b) eine MWD von größer als 3,5 aufweist.

2. Verfahren zur Herstellung einer extrudierten Polyolefinzusammensetzung mit verbesserten Oberflächeneigenschaften in bezug auf Glanz und Glätte, **dadurch gekennzeichnet, daß** es die Schritte umfaßt:
(a) der Bereitstellung einer Polyolefinmischung, die mittels Metallocenkoordinationskatalyse hergestellt worden sind, welche
- 40 Gew.-% bis nicht mehr als 80 Gew.-% der gesamten Polymermischung an Polyethylen mit niedrigem M_{w}, das durch einen M.I. (g/10 Minuten, 190 °C, 2,16 kg) von größer als oder gleich 50 aber kleiner als oder gleich 1000 und eine Dichte von größer oder gleich 0,900 bis zu 0.945 g/cm³ gekennzeichnet ist,
- 55 bis 20 Gew.-% der gesamten Polymermischung an LLDPE mit einer Dichte kleiner als 0,930, worin der Ethylengehalt mindestens 70 Mol.% beträgt, vorzugsweise mindestens 80 Mol.%, wobei C₃- bis C₁₆-α-Olefine und/oder -Diolefine copolymerisiert sind,
wobei der M.I. von der b)-Komponente so gewählt ist, daß die Mischung von a) und b) eine MWD von größer als 3,5 aufweist
b) der Extrusion der Mischung aus Schritt a) bei Scherraten von nicht kleiner als 500 s⁻¹ umfaßt.

3. Verwendung von 40 Gew.-% bis nicht mehr als 80 Gew.-% der gesamten Polymermischung an Polyethylen mit niedrigem M_{w}, das mittels Metallocenkoordinationskatalyse hergestellt worden ist und durch einen M.I. (g/10 Minuten, 190 °C, 2,16 kg) von größer als oder gleich 50 aber kleiner als oder gleich 1000 und eine Dichte von größer oder gleich 0,900 bis zu 0.945 g/cm³ **gekennzeichnet** ist,
in einer Polyolefinmischung, die 55 bis 20 Gew.-% der gesamten Polymermischung an LLDPE, das mittels Metallocenkoordinationskatalyse hergestellt worden ist und eine Dichte kleiner als 0,930 aufweist, wobei der Ethylengehalt mindestens 70 Mol.% beträgt, vorzugsweise mindestens 80 Mol.%, wobei C₃- bis C₁₆-α-Olefine und/oder -Diolefine copolymerisiert sind,
wobei der M.I. von der b)-Komponente so gewählt ist, daß die Mischung von a) und b) eine MWD von größer als 3,5 aufweist.

4. Verwendung nach Anspruch 3, bei der die Oberflächenrauhheit (R_{A}) größer als 0 aber kleiner als 2 µm ist.

5. Verwendung nach Anspruch 3 oder 4, bei der nach der Extrusion mit Scherraten von nicht kleiner als 1900 s⁻¹ die Oberflächenstörung wie gemessen durch die Oberflächenrauhheit (R_{A}) kleiner als 10 µm ist.

## Revendications

1. Mélange polyoléfinique de polymères polyéthyléniques préparé par catalyse de coordination par métallocène, convenant pour l'extrusion sous un grand effort de cisaillement, **caractérisé en ce qu'**il comprend :
a) de 40 % en poids jusqu'à un maximum de 80 % en poids du mélange total de polymères, d'un polyéthylène de bas poids moléculaire **caractérisé par** un indice de fluidité (g/10 min, 190°C, 2,16 kg) supérieur ou égal à 50 mais inférieur ou égal à 1000, ayant une masse volumique supérieure ou égale à 0,900 allant jusqu'à 0,945 g/cm³ et
b) 55 à 20 % en poids du mélange total de polymères d'un PELBD ayant une masse volumique inférieure à 0,930 g/cm³ dont la teneur en éthylène est au moins égale à 70 moles %, de préférence au moins égale à 80 moles %, dans lequel des α-oléfines et/ou des dioléfines en C₃ à C₁₆ sont copolymérisées, et dans lequel l'indice de fluidité du composant b) est inférieur à 50 et choisi de manière que le mélange de a) et b) présente une dispersion de poids moléculaire supérieure à 3,5.

2. Procédé de production d'une composition polyoléfinique extrudée ayant des propriétés accentuées d'éclat et de lissé de surface, **caractérisé par le fait qu'**il comprend les étapes consistant :
a) à prendre un mélange polyoléfinique de polymères polyéthyléniques préparé par catalyse de coordination par métallocène, comprenant :
- une proportion allant de 40 % en poids à un maximum de 80 % en poids du mélange total de polymères, d'un polyéthylène de bas poids moléculaire **caractérisé par** un indice de fluidité (g/10 min, 190°C, 2,16 kg) supérieur ou égal à 50, mais inférieur ou égal à 1000 et ayant une masse volumique supérieure ou égale à 0,900 et au maximum égale à 0,945 g/cm³,
- 55 à 20 % en poids du mélange total de polymères d'un PELBD ayant une masse volumique inférieure à 0,930 g/cm³, dont la teneur en éthylène est au moins égale à 70 moles %, de préférence au moins égale à 80 moles %, où des α-oléfines et/ou des i dioléfines en C₃ à C₁₆ sont copolymérisées, l'indice de fluidité du composant b) étant inférieur à 50 et choisi de manière que le mélange de a) et b) présente une dispersion de poids moléculaire supérieure à 3,5, et
b) l'extrusion du mélange de l'étape a) à des vitesses de cisaillement non inférieures à 500 s⁻¹.

3. Utilisation de 40 % en poids à un maximum de 80 % en poids du mélange total de polymères d'un polyéthylène de i bas poids moléculaire préparé par catalyse de coordination par métallocène **caractérisé par** un indice de fluidité (g/10 min, 190°C, 2,16 kg) supérieur ou égal à 50, mais inférieur ou égal à 1000 et de masse volumique supérieure ou égale à 0,900 et au maximum égale à 0,945 g/cm³,
dans un mélange polyoléfinique comprenant 55 à 20 % en poids du mélange total de polymères de PELBD préparé par catalyse de coordination par métallocène ayant une masse volumique inférieure à 0,930 g/cm³, dont la teneur en éthylène est au moins égale à 70 moles %, de préférence au i moins égale à 80 moles %, où des α-oléfines et/ou des dioléfines en C₃ à C₁₆ sont copolymérisées,
l'indice de fluidité du composant b) étant inférieur à 50 et choisi de manière que le mélange de a) et b) présente une dispersion de poids moléculaire supérieure à 3,5, en vue d'atténuer la déformation en surface de ce mélange polyoléfinique exposé à une extrusion à grande vitesse de cisaillement non inférieure à 500 s⁻¹.

4. Utilisation suivant la revendication 3, dans laquelle la rugosité de surface (R_{A}) est supérieure à 0 mais inférieure à 2 µm.

5. Utilisation suivant la revendication 3 ou 4, dans laquelle, après l'extrusion à des vitesses de cisaillement non inférieures à 1900 s⁻¹, la déformation de surface mesurée par la rugosité de surface (R_{A}) est inférieure à 10 µm.
